# EUROPEAN PATENT APPLICATION

(11) **EP 4 618 405 A1**
(43) Date of publication of application: **17.09.2025**
(21) Application number: 25163647.8
(22) Date of filing: 13.03.2025
(51) Int. Cl.: H02P 29/02, H02M 1/00, H02P 25/03, H02P 27/04, H02P 6/16

(54) **CONTROL LOOP & DC BUS VOLTAGE STABILITY IN A MOTOR DRIVE USING SINGLE CURRENT SENSOR**

(30) Priority: 14.03.2024 IN 202411018679
(71) Applicant: Goodrich Actuation Systems Limited, Wolverhampton, West Midlands WV10 7EH (GB)
(72) Inventor: KALLURI, Nageswara Rao, Bangalore (IN); LOPES, Mikhail Francisco, Miramar (IN); KHARE, Shaurya Swami, Niwari (IN); GUPTA, Ravi, Jaipur (IN); RAWAT, Karan, Bangalore (IN); SEMBANAN, Anbarasu, Bengaluru (IN); SHIVANANDA MURTHY, Sagar, Bangalore (IN)
(74) Representative: Dehns

(57) **Abstract**

A motor drive system (100) includes a direct current (DC) power source and an inverter (106) comprising a plurality of switching elements (142, 144). The inverter (106) is configured to receive a DC input from the DC power source and output an alternating current (AC) to three phases of a motor (102). The system (100) also includes a single current sensor (108) arranged to sense a current from the DC power source to the inverter (106) and a control unit (104) that controls the operation of the switching elements (142, 144) based in part on an output of the single current sensor (108). A control unit (104) controls the operation of the switching elements (142, 144) based in part on an output of the single current sensor (108). The control unit (104) is configured to determine that a Hall sensor (HA, HB, HC) change has occurred and to control the operation of the switching elements (142, 144) based on a prior sensor reading for a time period (t_{blanking}) after the Hall sensor (HA, HB, HC) change.

## Description

### TECHNICAL FIELD

The following description is related to motor drives and, in particular, to motor drives using a single current sensor.

### BACKGROUND

As progress is made for creating an FEA (Fully Electric Aircraft) or an MEA (More Electric Aircraft), the functionality previously achieved by using pneumatic and hydraulic systems is now either replaced fully or partially by an electric system. Examples of systems being electrified include, but not limited to, flight controls, fuel pumps, oil pumps, cooling pumps, landing system, cargo and air management system etc. An integral part of an electrified system are motor drive electronics (MDEs) that control a motor along with other components like feedback and monitoring sensors, mechanical connections etc.

Of importance to this disclosure, motor current sensing is an essential function of the motor drives. Being able to sense current supplied to the various phases of the motor allows for the regulation of the current, and, thus, the torque produced by the motor.

Traditionally, there are different approaches available on the sensing point and type of sensing. In addition to the current regulation, sensing of the current can also be used to protect the motor drive. The currents can, for example, be used to identify various faults pertaining to the motor such as over-current, inverter/bridge shoot through, motor phase grounded, inverter output grounded, all of which could damage the motor drive.

### SUMMARY

According to an aspect of the disclosure, a motor drive system, is disclosed. The system can include: a direct current (DC) power source; an inverter comprising a plurality of switching elements. The inverter is configured to receive a DC input from the DC power source and output an alternating current (AC) to three phases of a motor. The system can also include a single current sensor arranged to sense a current from the DC power source to the inverter and a control unit that controls the operation of the switching elements based in part on an output of the single current sensor. The control unit is configured to determine that a current direction has changed in the motor and to control the operation of the switching elements based on a prior sensor reading for a time period (t_{blanking}) after the current has changed directions.

In addition to one or more of the features described above, or as an alternative to any of the foregoing embodiments, the system can further include a sense resistor connected between the DC power source and the inverter. The single sensor can sense a voltage across and thereby a current passing through the sense resistor.

In addition to one or more of the features described above, or as an alternative to any of the foregoing embodiments, the sensor can include a signal conditioner that converts the analog voltage across the sense resistor into a digital output.

In addition to one or more of the features described above, or as an alternative to any of the foregoing embodiments, the digital output can be provided to the control unit.

In addition to one or more of the features described above, or as an alternative to any of the foregoing embodiments, the control unit can include an input section that receives the digital output and produces current feedback signal.

In addition to one or more of the features described above, or as an alternative to any of the foregoing embodiments, the input section can include an input filter and a feedback signal processor that blanks the digital output signal during the time period (t_{blanking}).

In addition to one or more of the features described above, or as an alternative to any of the foregoing embodiments, the current feedback signal processor provides the prior sensor reading during the time period (t_{blanking}) to a current controller that controls operation of the inverter.

Also disclosed is a motor system that includes a DC motor; and a motor drive system according to any prior embodiment or that is otherwise disclosed herein.

In addition to one or more of the features described above, or as an alternative to any of the foregoing motor system embodiments, wherein the motor drive system can further include a sense resistor connected between the DC power source and the inverter, wherein the single sensor senses a voltage across and thereby a current passing through the sense resistor.

In addition to one or more of the features described above, or as an alternative to any of the foregoing motor system embodiments, the sensor can includes a signal conditioner that converts the analog voltage across the sense resistor into a digital output.

In addition to one or more of the features described above, or as an alternative to any of the foregoing motor system embodiments, digital output can provided to the control unit.

In addition to one or more of the features described above, or as an alternative to any of the foregoing motor system embodiments, the control unit cam include an input section that receives the digital output and produces current feedback signal.

In addition to one or more of the features described above, or as an alternative to any of the foregoing motor system embodiments, the input section can include an input filter and a feedback signal processor that blanks the digital output signal during the time period (t_{blanking}).

In addition to one or more of the features described above, or as an alternative to any of the foregoing motor system embodiments, the current feedback signal processor provides the prior sensor reading during the time period (t_{blanking}) to a current controller that controls operation of the inverter.

In addition to one or more of the features described above, or as an alternative to any of the foregoing motor system embodiments, the motor can be a brushless DC motor (BLDC) or a permanent magnet synchronous motor (PMSM).

Also disclosed is a method of controlling a motor. The method can be applied to any motor system or motor drive system disclosed herein. The method can include: receiving power from a direct current (DC) power source; converting DC power from the DC power source to an alternating current (AC) to three phases of a motor with an inverter comprising a plurality of switching elements; sensing a current from the DC power source to the inverter with a single current sensor; and controlling operation of the switching elements based in part on an output of the single current sensor, wherein the controlling includes determining that a motor position has changed and controlling the operation of the switching elements based on a prior sensor reading for a time period (t_{blanking}) after the position has changed.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 shows a system of an example motor drive electronics circuit according to one embodiment;
FIG. 2A shows an example of an uncorrected motor drive feedback current;
FIG. 2B shows an shows an example of a corrected motor drive feedback current according to one embodiment; and
FIG. 3 shows an example of a processing unit of the motor drive electronics of FIG. 1.

### DETAILED DESCRIPTION

As will be described below, a current sensing system/method is provided that can streamline the current measurement functions for motor drive electronics. One embodiment may provide a single sense location on the DC bus line. The current is measured by current sensor circuit that measures a voltage across a current sense resistor (Rsense). The sensor can include Sigma-Delta Modulator and can monitor for faults (e.g., shoot through protection, Motor faults, overload) and motor control. The system herein can be used for both permanent magnet synchronous motors (PMSMs) and brushless DC motors (BLDCs).

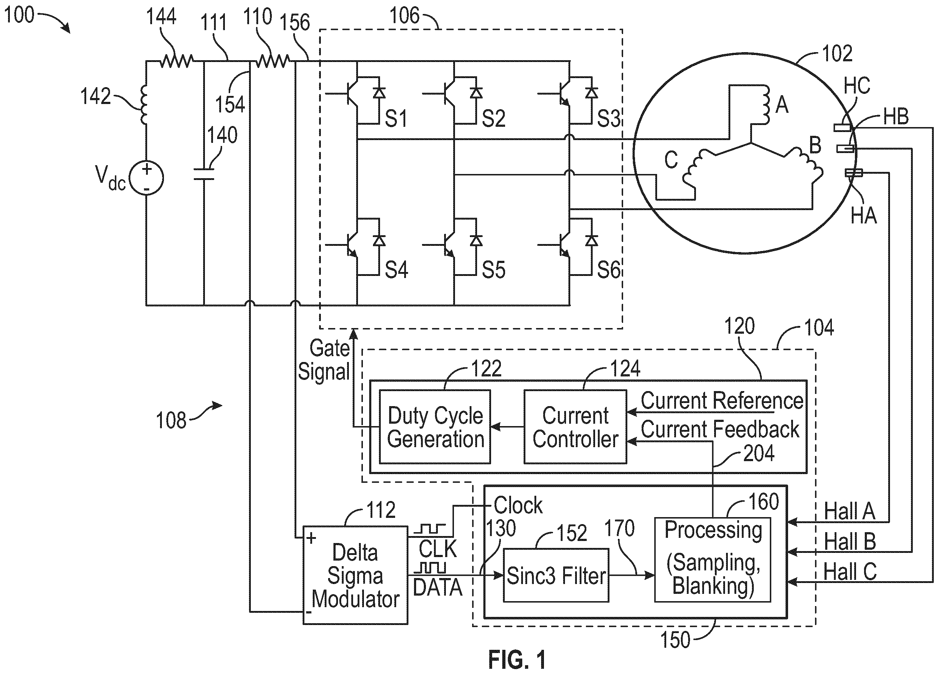

With reference to FIG. 1, motor control electronics 100 for a three phase motor 102. The electronics can be referred to as drive system herein. The drive system 100 includes a control unit 104 and a three-phase inverter 106.

The three-phase inverter 106 converts DC power received from a DC source in to three phase AC power that is provided to the motor 102. The DC source is shown a V_DC in FIG. 1. The control unit 104 can be any type of processor and can be single element or can be distributed. Other examples can include an FPGA and the like.

The control unit 104 can receive signals from a current sensor 108. The sensor 108 includes a sense resistor 110 and signal conditioner 112. An example of such a conditioner is a delta sigma modulator that converts the analog voltage across the sense resistor 110 into a digital output 130.

The control unit 104 can include motor control logic 120 that provides gate drive signals to a plurality of switches S1, S2, ....S6 of the inverter 106 so as to convert the DC voltage to AC power provided to each phase (A, B, C) of the motor 102 in the known manner.

In some prior art systems, three to four current sensing locations in the inverter 106 were utilized to measure current to control the motor 102 via the inverter 106. Herein, a single current sensor is provided for all phases of the motor 102. This reduces the number and complexity of the sensor system.

The signal conditioner 112 converts the voltage to a digital signal compatible with the control unit 104. An example of such a conditioner is a delta sigma modulator that converts the analog voltage across the sense resistor 110 into a digital output 130. In particular, the signal conditioner 112 can receive an analog value and provide periodic digital output pulses that have a magnitude equal to (or otherwise related to, e.g., scaled) the magnitude current passing through the sense resistor 110 into the inverter 106/motor 102.

The control unit 104 can utilize current information from the sensor 108 with a motor control algorithm (e.g., motor control logic 120) and can direct operation of the switches S1...S6 as needed. As shown, the motor control logic includes a current controller 124 that determines a desired current based on a reference current and the measured current as measured by the sensor 108. Based on the desired current, a duty cycle generation unit 122 is provided that generates the gate signals.

The system can optionally include an input capacitor 140 connected across the input voltage Vin. The system 100 is shown as including signal conditioning elements 142, 144 connected between the input voltage Vin and the sensor 108. As shown, the signal conditioning elements 142, 144 are an inductor and a resistor, respectively and represent the inherent properties of the wiring and may or may not be different elements.

With further reference to FIG. 1, the control unit 104 can also include an input section 150. The input section 150 receives inputs from the sensor 110 and the motor 102 and produces a current feedback signal that is provided to the motor control logic 120 (and in particular, to the current controller 124).

The inputs from the motor can be hall sensor inputs (shown as Hall A, Hall B and Hall C) taken from respective phases of the motor 102. The control unit 104/input section 150 can, in particular, include an input filter 152 operably connected to the sensor 108 (and signal conditioner 112 on particular) that creates n-bit words from the digital pulses. An example of such a filter is a Sinc3 filter. The input section can also include a feedback signal processor 160 that receives the n-bit words and converts them to an analog current value (e.g., current feedback signal).

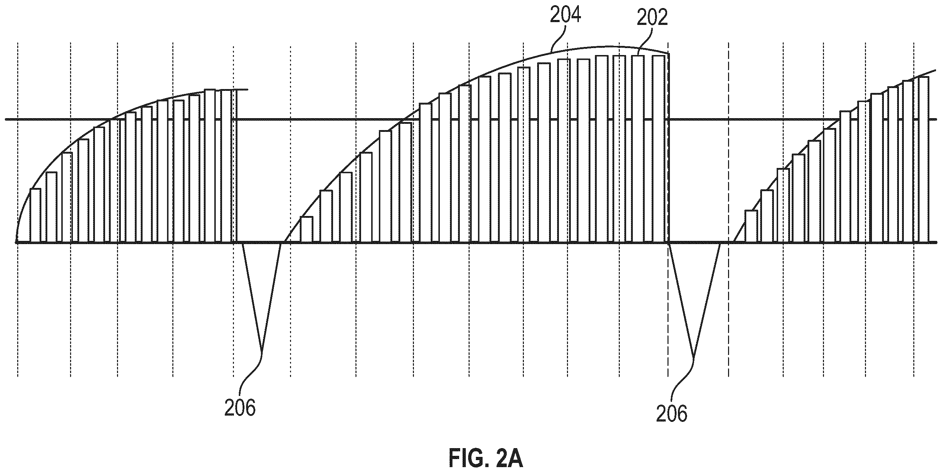

With reference now to FIGs. 1 and 2A, an example representation of the analog voltage across the resistor 100 is shown by trace 202. The voltage is converted into discrete values by the signal conditioner 112. These discrete values are illustrated as output 130.

The feedback signal processor 160 receives the signal from the signal conditioner 112 and produces a signal 204 that can serve as the current feedback signal. Signal 204 can also be referred to as a current feedback signal herein. In one embodiment, signal 204 is a series of digital values.

The current feedback signal 204 is provided to the current controller 124 and compared to a reference current by the current controller 124 to control operation of the inverter 106 via the duty cycle generation unit 122.

It has been discovered, however, that when the phase of the motor 104 being supplied by the inverter 106 changes, the current/voltage at sense resistor 110 can fall to a negative value and this can in turn lead to a negative spike 206 which gets reflected on the current/voltage feedback An example is instructive and further focuses on the sensor 108 and the inverter 106. As shown in FIG. 1, the sensor 108 includes sense resistor 110 on the DC bus line 111. Such a sensor may be well suited for current sensing applications where the voltage across a sense resistor 110 is used for motor control. As discussed above, the sensor 108 also includes the signal conditioner 112. Current flowing through the sense resistor 110 produces a voltage across two terminals 154, 156 of the sensor 108. As will be understood, the selecting the appropriate resistance of the sense resistor 110. The input resistor 144, the wire inductance 142 and the input capacitor 140 form an input filter.

The signal conditioner 112 converts analog input signal into a high speed, single-bit data stream (e.g., FIG. 2A). The digital output is then processed by input filter 152 to provide an N-bit word equivalent which is indicated as output 170 in FIG. 1. As noted above, trace 202 can be sampled by the feedback signal processor 160 to provide the value of current flowing through the current sense resistor 110.

It shall be noted that herein, commutation of the motor 102 is 120-degree commutation. In this commutation technique there will be only two switches (S1...S6) on any point in time. maintain continuous motion of the motor (and thus change a Hall signal to low) one of the switches will turn off and another switch in a different phase will turn on.

During implementation of the current loop, as noted above, it has been observed the loop provides good control over during the first few Hall changes but after a point the current and voltage of the DC bus may begin to oscillate and the lead to the DC bus current exceeding the upper limit of current set by the control loop. To understand why the control was being lost after a few Hall changes it was discovered that feedback signal contained spikes 206 after certain or periodic Hall changes. As noted above, the current feedback is the data sent by feedback signal processor 160 after it is filtered, sampled, and processed. If the spikes are fed back into the controller 124, the controller tries to correct this surge which leads to a sudden reduction in duty cycle. The duty is then ramped up again to meet the current requirement of the load, this sudden decrease and increase of duty is what leads to oscillation of DC bus voltage and current.

To increase the stability of the feedback, the feedback signal processor 160 is provided with signals that represent when the current in each phase changes. Such a change is referred to as a Hall change herein as the signal is received from a Hall sensor. As discovered, the sudden change in current that causes the duty to vary largely are cyclic occurrences that take place at hall changes. These hall signals (Hall A, Hall B, Hall C) come directly from the motor 102 and are used to determine motor speed. The sensors are shown schematically as hall sensors HA, HB and HC that are each associated with a respective phase of the motor 102.

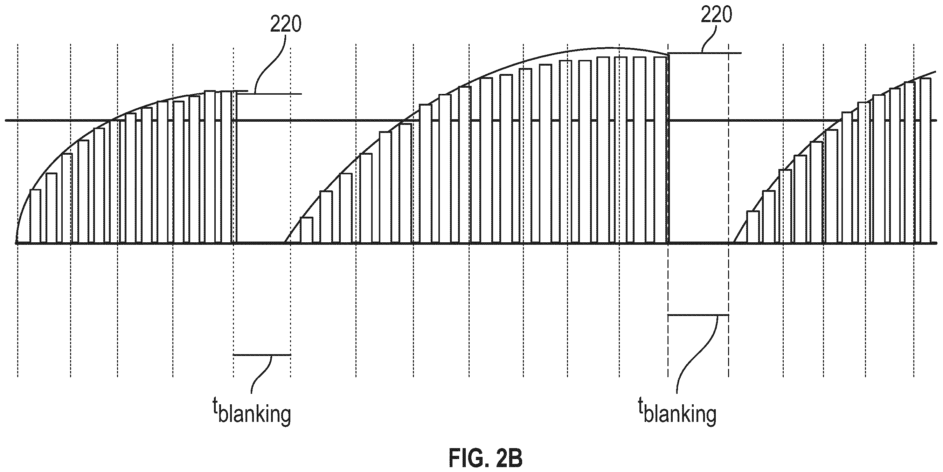

Thus, to remove the sudden change seen on the current sensed (e.g., the spikes 206), the feedback signal processor 160 can blank the sensed current for a time period (t_{blanking}) after a Hall sensor (e.g., position) change (referred to a position or Hall change herein). In this period of blanking, the data is still collected by the feedback signal processor 160 but it is not sent to the current controller 124. Instead the current data from before the Hall change is transmitted. This is shown in FIG. 2B where the prior current level is shown by section 220 and is held constant for t_{blanking}. Operating in such a manner removes the negative spikes 206 and, thus, the control loop does not have to apply any correction to duty cycle in that period. This keeps the DC bus current stable and thus the current loop can maintain control over the duty cycle supplied to the inverter switches S1-S6.

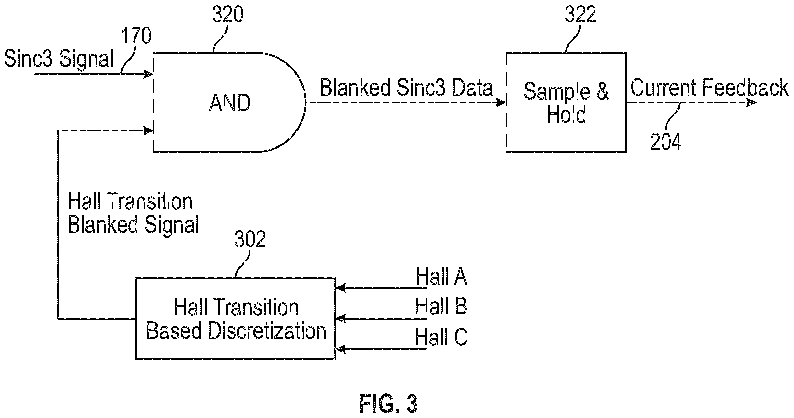

With reference now to FIG. 3, an example of feedback signal processor 160 according to one embodiment. The processor is shown as including logic gates but can be implemented in soft or firmware.

The processor includes a blanking element 302 that receives the hall signals Hall A, Hall B and Hall C. Each time any of the hall signals transitions in a manner that indicates a current reversal, the blanking element 302 will output a signal that blocks the digital output 170. As shown, the digital output 130 is provided to logic gate 320 (here, an AND gate). If the output of the blanking element 302 is low, the output of the AND gate 320 is also low. This will, thus, blank the digital output 170. The blanking element 302 will keep its output low for at least t_{blanking}. During t_{blanking} a sample and hold circuit 330 will hold the prior value of output 170 for t_{blanking}. This will result in the waveform shown in FIG. 2B.

Operating as described above, the systems and methods herein can provide stability to a current control loop. This can help improve current control and provide accurate reading of current sensed. Further, the systems and methods herein can provide DC bus voltage stability hence input current stability and possible reduced size of DC link Capacitor.

While the disclosure is provided in detail in connection with only a limited number of embodiments, it should be readily understood that the disclosure is not limited to such disclosed embodiments. Also, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A motor drive system, comprising:
a direct current (DC) power source;
an inverter comprising a plurality of switching elements, wherein the inverter is configured to receive a DC input from the DC power source and output an alternating current (AC) to three phases of a motor;
a single current sensor arranged to sense a current from the DC power source to the inverter; and
a control unit that controls the operation of the switching elements based in part on an output of the single current sensor, wherein the control unit is configured to determine that a Hall sensor change has occurred in the motor and to control the operation of the switching elements based on a prior sensor reading for a time period (t_{blanking}) after the Hall sensor change;
wherein the Hall sensor change occurs when a current direction in a motor phase changes.

2. The system of claim 1, further comprising a sense resistor connected between the DC power source and the inverter, wherein the single sensor senses a voltage across and thereby a current passing through the sense resistor.

3. The system of claim 2, wherein the sensor includes a signal conditioner that converts the analog voltage across the sense resistor into a digital output.

4. The system of claim 3, wherein the digital output is provided to the control unit.

5. The system of claim 4, wherein the control unit includes an input section that receives the digital output and produces current feedback signal.

6. The system of claim 5, wherein the input section includes an input filter and a feedback signal processor that blanks the digital output signal during the time period (t_{blanking}).

7. The system of claim 6, wherein the current feedback signal processor provides the prior sensor reading during the time period (t_{blanking}) to a current controller that controls operation of the inverter.

8. A motor system comprising:
a DC motor; and
a motor drive system as recited in any preceding claim connected to the motor.

9. The motor system of claim 8, wherein the motor is a brushless DC motor (BLDC).

10. The motor system of claim 8, wherein the motor is a permanent magnet synchronous motor (PMSM).

11. A method of controlling a motor, the method comprising:
receiving power from a direct current (DC) power source;
converting DC power from the DC power source to an alternating current (AC) to three phases of a motor with an inverter comprising a plurality of switching elements;
sensing a current from the DC power source to the inverter with a single current sensor; and
controlling operation of the switching elements based in part on an output of the single current sensor, wherein the controlling includes determining that a Hall sensor change has occurred and controlling the operation of the switching elements based on a prior sensor reading for a time period (t_{blanking}) after the Hall sensor change;
wherein the Hall sensor change occurs when a current direction in a motor phase changes.
